Europäisches Patentamt

(19) European Patent Office

Office européen des brevets

(11) Numéro de publication: **0 077 238**
**B1**

(12) **FASCICULE DE BREVET EUROPEEN**

(45) Date de publication du fascicule du brevet:
05.02.86

(21) Numéro de dépôt: **82401752.9**

(22) Date de dépôt: **28.09.82**

(51) Int. Cl.⁴: **H 04 L 9/00**

(54) Procédé et dispositif pour authentifier la signature d'un message signé.

(30) Priorité: **09.10.81 FR 8119090**

(43) Date de publication de la demande:
**20.04.83 Bulletin 83/16**

(45) Mention de la délivrance du brevet:
**05.02.86 Bulletin 86/6**

(84) Etats contractants désignés:
**CH DE FR GB IT LI NL SE**

(56) Documents cités:
**EP - A - 0 021 401**
**EP - A - 0 035 448**

**PROCEEDINGS OF THE NATIONAL ELECTRONICS**
**CONFERENCE, vol. 35, 1er octobre 1981, pages 296-301,**
**Oak Brook, Ill. USA SMID: "Authentication using the**
**Federal Data Encryption Standard"**

(73) Titulaire: **COMPAGNIE INTERNATIONALE POUR**
**L'INFORMATIQUE CII - HONEYWELL BULL (dite**
**CII-HB), 94, avenue Gambetta, F-75020 Paris (FR)**

(72) Inventeur: **Mollier, Jean, 94 avenue Gambetta,**
**F-75020 Paris (FR)**
Inventeur: **Saada, Charles, 94 avenue Gambetta,**
**F-75020 Paris (FR)**

(74) Mandataire: **Doireau, Marc et al, 94, avenue Gambetta,**
**F-75020 Paris (FR)**

**0 077 238**

## Description

L'invention concerne généralement et a essentiellement pour objet un procédé et un dispositif pour authentifier la signature d'un message signé reçu par un appareil récepteur et transmis à partir d'un appareil émetteur par une voie de transmission quelconque.

D'une façon générale, un message est signé des l'instant où l'on associe à ce message la signature de l'émetteur de ce message. Pour une meilleure compréhension de l'invention, il est important de définir au préalable ce qu'il faut entendre concretement par message et par signature:
- message : un message est constitué par toute suite de caracteres alphanumériques représentatifs d'un texte en clair ou d'un texte codé, cette suite pouvant être avantageusement remplacée par une représentation contractée en utilisant par exemple les codes de Hamming.
- signature : une signature est constituée par toute suite de caracteres alphanumériques représentatifs de l'identité de l'émetteur du message qui peut être indifféremment une personne physique ou morale.

Associer une signature à un message n'est en fait, dans la majorité des cas, qu'une simple juxtaposition du contenu du message et de la signature de l'émetteur du message. En effet, signer un message ne revient qu'ü accoler au message une signature avec généralement interposition d'un signe de ponctuation.

Il devient alors compréhensible qu'une telle juxtaposition laisse la possibilité à un fraudeur de combiner à volonté des messages et des signatures d'origines differentes.

Pour pallier cet inconvénient majeur ou l'absence de lien réel entre un message et sa signature, la demanderesse a décrit, dans sa demande de brevet français n° 80 07 912 déposée le 9 avril 1980 et correspondant à la demande EP-A-0037762 publiée le 14 octobre 1981, un système de transmission qui lie de façon automatique et indissociable le contenu ou texte d'un message à sa signature. Ainsi, à chaque message du méme signataire correspond une signature différente et deux messages identiques émis par des personnes différentes n'ont pas la meme signature. L'élaboration d'une telle signature fait essentiellement appel à un programme de calcul de signature qui prend en compte non seulement le contenu du message, mais également au moins un paramàtre dénommé clé secrete inconnue méme de l'émetteur du message.

S'il est ainsi permis de limiter les risques de fraude, l'authentification de la signature d'un message devient plus complexe étant donné qu'à tout message d'un meme émetteur est associée une signature différente.

L'objet de la présente invention est justement de concevoir un procédé qui permette d'authentifier, d'une façon simple, la signature d'un message élaborée automatiquement comme décrit dans la demande de brevet pre'citée, sans pour autant donner à une quelconque personne les moyens lui permettant de' prendre connaissance de la signature réelle d'un message dont la signature aurait été volontairement ou involontairement modifiée.

L'invention a donc pour objet un procédé pour authentifier la signature d'un message signé reçu par un appareil récepteur et transmis à partir d'un appareil émetteur par une voie de transmission quelconque, la signature d'un message étant élaborée automatiquement au niveau de l'appareil émetteur à partir d'un programme de calcul de signature faisant au moins appel au contenu du message à transmettre et à un parametre ou clé secrete inconnue de l'émetteur du message, caractérisé en ce qu'il consiste, pour vérifier l'authenticité de la signature d'un message reçu par l'appareil récepteur:
- à recalculer automatiquement la signature du message reçu à partir d'au moins le même programme de calcul de signature précité prenant en compte le contenu du message reçu et la méme clé secrète précitée également inconnue du récepteur du message,
- à comparer automatiquement la signature du message reçu et la signature recalculée par l'appareil récepteur,
- et à indiquer seulement au récepteur du message, le résultat égal ou différent de la comparaison précédente tout en interdisant au récepteur du message la possibilite de pouvoir prendre connaissance de la valeur de la signature recalculée.

Toutefois, bien qu'inconnue de la personne émettrice d'un message, la clé secrete précitée n'en est pas moins attribuée à cette personne et à cette seule personne. Aussi, si l'appareil récepteur ne prend en compte qu'une seule clé secrete, il ne pourra alors authentifier que des signatures de messages signés émis par la seule et unique personne à laquelle cette clé secrete a été attribuée.

Pour lever cette limitation, le procédé conforme à l'invention prévoit en plus, au niveau de l'appareil recepteur, la possibilité d'authentifier des messages signés émis par des personnes différentes.

Aussi, selon une autre caractéristique importante de l'invention, le procédé consiste:
- au niveau de l'appareil émetteur : à autoriser plusieurs personnes à émettre des messages signés avec élaboration automatique de la signature, chaque personne ayant d'une part, une clé secrete propre inconnue de la personne, et d'autre part une identité non secrete transmise avec le message, et
- au niveau de l'appareil récepteur : avant de recalculer la signature du message reçu, à déterminer automatiquement la clé secrete de l'émetteur du message à partir de l'identité de l'émetteur transmise avec le message.

Ainsi, l'identité d'un signataire d'un message est définie :
- explicitement par son identité qu'il communique au destinataire, et
- implicitement par l'usage d'une clé secrète utilisée lors de l'élaboration de la signature.

Il y a donc un couple (identité-clé secrete) qui ne peut être dissocié.

Selon une autre caractéristique importante de l'invention, le procédé consiste à subdiviser la clé secrete de

2

chaque personne émettrice d'un message en n clés élémentaires secrètes choisies parmi m clés élémentaires secrètes regroupées dans une zone mémoire secrète de l'appareil récepteur, et à identifier chaque personne émettrice par n paramètres représentatifs des adresses de n clés élémentaires dans la zone mémoire secrète précitée, ces n paramètres étant transmis avec le message pour permettre ü l'appareil récepteur de calculer automatique-ment et secretement, au moyen d'un programme par exemple, la clé secrète de la personne émettrice àvant de recalculer la signature du message reçu.

L'invention concerne également un dispositif pour la mise en oeuvre du procédé tel que défini précédemment, du type consitué par un àppareil émetteur relié par une voie de transmission quelconque à un àppareil récepteur, appareil émetteur comprenant au moins un dispositif de mémorisation dans lequel sont au moins enregistrés un progranme de calcul de signature et un paramètre ou clé secrète inconnue de l'émetteur du message ; un circuit de traitement pour élaborer automatiquement la signature d'un message à partir du programme de calcul précité prenant en compte le contenu du message et la clé secrète précitée, caractérisé en ce que l'appareil récepteur comprend au moins:

- un dispositif de mémorisation dans lequel sont au moins enregistrés le programme de calcul précité et la même clé secrète précitée également inconnue du récepteur du message,
- des circuits de tràitement pour recalculer la signature d'un message reçu à partir du contenu du message, du programme et de la cle secrete,
- un dispositif de comparaison dont une première entrée reçoit de l'extérieur la signature du message reçu et dont la seconde entrée reçoit la signature recalculée par les circuits de traitement précités, et
- un dispositif témoin à au moins deux états stables indiquant respectivement les résultats vrai ou différent de la comparaison précitée, l'entrée du dispositif témoin étant reliée à la sortie du dispositif de comparaison précite.

Selon une autre caracteristique importante du dispositif conforme à l'invention, le dispositif de memorisation de l'appareil recepteur contient une première zone secrète dans laquelle sont prè-enregistres les m cles elementaires précitées, et une deuxième zone dans laquelle est préenregistré un second programme ou programme de calcul de la cle secrète de la personne émettrice d'un message à partir des n paramètres précités représentatifs des adresses des n clés élémentaires et transmis avec le message.

Selon une autre caractéristique importante de l'invention:
- l'appareil émetteur est composé de deux parties : une partie fixe accessible à toute personne qui est destinée à assurer la transmission d'un message, et un dispositif portatif dénommé carte de signature personnelle à chaque personne et renfermant de façon inaccessible depuis l'extérieur la clé secrète de la personne, les circuits de traitement pour calculer la signature d'un message à partir du contenu du message et de la clé secrète, et de preference le programme d'elaboration automatique de cette signature, et
- l'appareil récepteur est composé de deux parties : une partie fixe accessible à toute personne susceptible de recevoir un message, et un dispositif portatif dénommé carte de contrôle à la disposition de plusieurs personnes et renfermant, de façon inaccessible depuis l'extérieur, le dispositif de mémorisation précité, les circuits de traitement et le circuit de comparaison.

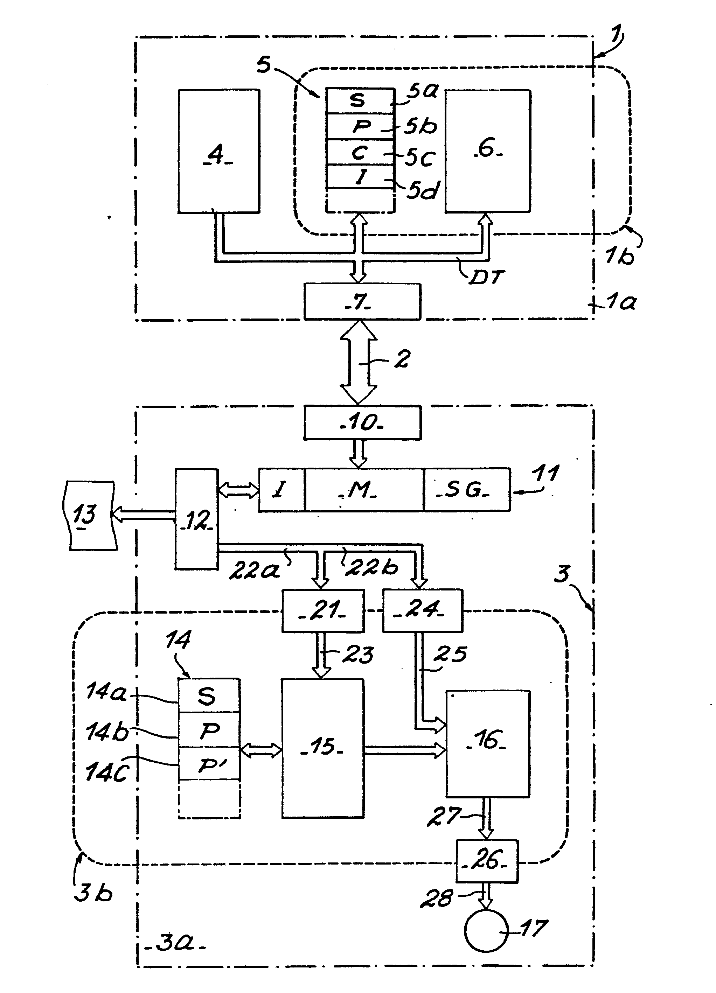

D'autres caractéristiques, avantages et détàils ressortiront de l'explication qui va suivre en se reportant à la figure annexée qui représente schématiquement sous forme de schéma-bloc un mode de réalisation préférentiel de l'invention.

Le problème posé et résolu par l'invention consiste à authentifier à la réception la signature d'un message signé transmis par une voie de transmission quelconque.

Soit un appareil émetteur (1), du type de celui décrit dans la demande de brevet français précitée, et qu'il n'est pas nécesaire de redécrire en détail. Cet appareil émetteur (1), mis à la disposition d'au moins un émetteur personne physique ou représentative d'une personne morale, est relié par une voie de transmission quelconque telle que figurée en (2) à un appareil de réception (3) mis à la disposition d'au moins un récepteur personne physique ou représentative d'une personne morale.

Pour la compréhension de l'invention, il suffit de savoir que l'appareil émetteur (1) comprend au moins:
- un dispositif de saisie de données (4) tel qu'un clavier de machine à écrire d'une machine de traitement de texte par exemple, destiné à prendre en compte un message M à transmettre et éventuellement capable de le transformer en un message contracté représentatif (utilisation des codes Hamming par exemple),
- un dispositif de mémorisation (5) ou mémoire qui comprend au moins deux zones (5a) et (5b), la zone (5a) étant inaccessible depuis l'extérieur et renfermant la clé secrete S d'une personne, la zone (5b) renfermant un programme de calcul P de signature SG,
- des circuits de traitement (6) pour dérouler le programme P de calcul de signature, reliés d'une part à la mémoire (5) et d'autre part au dispositif de saisie de données (4),
- un ensemble de circuits (7) reliés d'une part aux circuits de traitement (6) et d'autre part au dispositif de saisie de données (4), pour associer le contenu du message M à sa signature SG calculée par les circuits de traitement (6), pour chiffrer éventuellement le message M afin de le rendre incompréhensible à toute personne, et pour assurer sa transmission par la voie de transmission (2) vers l'appareil récepteur (3).

L'ensemble des liaisons entre les différents éléments précédents est schématisé par un bus de liaison DT.

De façon avantageuse, l'appareil émetteur (1) est constitué en deux parties :
- un dispositif fixe (1a) accessible à toute personne et destiné à assurer la transmission d'un message avec élaboration automatique ou non de la signature,
- un dispositif portatif (1b) ou carte de signature personnelle à chaque personne renfermant de façon inaccessible depuis l'extérieur la clé secrète attribuée nominativement à une personne et inconnue de cette

0 077 238

personne, le dispositif de mémorisation (5) et les circuits de traitement (6).

L'appareil récepteur (3) comprend au moins :
- un ensemble de circuits (10) qui reçoivent le message M signé et destinés à restituer le message sous sa forme d'origine en fonction de son mode de transmission déterminé par l'ensemble des circuits (7) de l'appareil émetteur (1),
- un dispositif de visualisation (11) relié aux circuits (10) pour afficher en clair le message signé d'origine ; ce dispositif de visualisation (11) étant avantageusement relié à un dispositif d'entrée/sortie (12) permettant notamment d'imprimer le message signé reçu sur un support papier (13) par exemple,
- un dispositif de mémorisation (14) ou mémoire qui comprend au moins trois zones (14a), (14b) et (14c) dans lesquelles sont respectivement pré-enregistrés : m clés élémentaires secrètes, le programme de calcul P de signature SG précité, et un second programme P' de calcul de la clé secrète de la personne qui a émis un message,
- des circuits de traitement (15) reliés d'une part à la mémoire (14) et d'autre part au dispositif d'entrée/sortie (12), ces circuits de traitement ayant accès aux informations enregistrées dans la mémoire (14),
- un circuit de comparaison (16) dont une entrée est reliée à la sortie des circuits de traitement (15) et dont l'autre reliée au dispositif d'entrée/sortie (12) et
- un circuit témoin (17) à deux états stables, telle qu'une lampe, dont l'entrée est reliée à la sortie du circuit comparateur (16).

Selon une caractéristique importante de l'invention, la zone (14a) de la mémoire (14), les circuits de traitement (15) et le comparateur (16) doivent être inaccessibles depuis l'extérieur pour éviter à tout tiers de pouvoir prendre connaissance des informations enregistrées et traitées par ces circuits. De préférence, les programmes P et P' sont également rendus inaccessibles depuis l'extérieur.

De façon avantageuse, l'appareil récepteur (3) est constitué en deux parties :
- une part.ie fixe (3a) comprenant l'ensemble de circuits (10), le dispositif de visualisation (11), le dispositif d'entrée-sortie (12) et le circuit témoin (17),
- une seconde partie portative (3b) dénommée carte de contrôle accessible à plusieurs personnes et renfermant, de façon inaccessible depuis l'extérieur, le dispositif de mémorisation (14), les circuits de traitement (15) et le circuit de comparaison (16).

La carte de signature (1b) et la carte de contrôle (3b) sont conçues et organisées selon les techniques décrites par les brevets français de la Demanderesse n° 2 337 381 et n° 2 401 459.

Dans une telle réalisation, la carte de contrôle (3b) est accouplable au dispositif récepteur (3) et seules certaines entrées-sorties de cette carte (3b) sont accessibles depuis l'extérieur. Plus précisemment en se reportant a la figure annéxée, cette carte (3b) comprend des premières bornes d'entrée (21) reliées d'une part par des liaisons (22a) au dispositif d'entrée-sortie (12) et d'autre part par des liaisons (23) aux circuits de traitement (15) ; des secondes bornes d'entrée (24) reliées d'une part au dispositif d'entrée-sortie (12) par des liaisons (22b) et d'autre part à une borne d'entrée du comparateur (16) par des liaisons (25); et des troisièmes bornes de sortie (26) reliées d'une part par des liaisons (27) à la sortie du circuit de comparaison (16) et d'autre part à l'élément témoin (17) par des liaisons (28).

Pour rendre la carte de signature (lb) nominative, il est important de la personnaliser par un code confidentiel C connu de la personne à laquelle est attribuee cette carte. Aussi, il est nécessaire de prévoir au moins une troisième zone (5c) dans la mémoire (5) de la carte de signature (1b) dans laquelle est enregistré le code confidentiel C. Cette mesure permet d'éviter l'utilisation de la carte de signature (1b) par une autre personne que celle à laquelle cet-te carte a été attribuée.

Il va être maintenant décrit le fonctionnement de l'ensemble tel que défini précédemment.

Soit une personne dénommée émetteur désireux de transmettre un message M à une autre personne dénommée recepteur.

Dans une première phase, l'émetteur élabore son message, sa contraction éventuelle, au niveau du dispositif de saisie de données (4) du dispositif émetteur (1). L'émetteur associe à son message une identification propre à cet émetteur et avantageusement constituée de n paramètres représentatifs des adresses de n clés élémentaires parmi les m élémentaires enregistrées dans la zone secrète (14c) de la mémoire (14). Il peut être avantageux d'associer automatiquement l'identification de l'émetteur au message qu'il désire transmettre. Pour cela, il suffit de prévoir une zone (5c) dans la mémoire (5) où est pré-enregistrée l'identification I de l'émetteur, c'est-à-dire les n paramètres précités.

Si l'émetteur désire signer son message avant de le transmettre, il doit insérer sa carte nominative de signature (lb) dans la partie fixe (la) de l'appareil émetteur (1). Une fois cet accouplement effectué, l'émetteur frappe son code confidentiel C au niveau du dispositif de saisie des données (4). Ce code confidentiel C est comparé automatiquement avec le code confidentiel C prealablement enregistré dans la zone (5c) de la mémoire (5) de la carte de signaturе (1b). Si il y a identité entre les deux codes la carte de signature (1b) est validée au niveau de l'appareil émetteur (1) et le processus de transmmission d'un message signé est alors initialisé.

Dans une seconde phase, le dispositif émetteur (1) élabore automatiquement la signature SG du message M. Cette élaboration s'effectue soit à partir du message proprement dit, soit à partir d'une forme contractée de ce message M obtenue au niveau du dispositif de saisie des données (4) ou au niveau des circuits de traitement (6), ou par tout autre dispositif intermédiaire approprié connu en soi et non repre'senté.

Cette signature SG est calculée par les circuits de traitement (6) à partir du programme P de calcul de

4

signature et de la clé secrète S pré-enregistrés dans les zones (5a) et (5b) de la mémoire (5), respectivement. Il est important de noter que le programme P d'élaboration de signature SG peut être quelconque à la seule condition qu'il prenne en compte l'intégralité du contenu du message pour être certain que toute modification de son contenu, si mineure soit-elle, entraîne automatiquement une modification de la valeur de la signature associée au message. Du fait que le programme P prend en compte la clé secrète S, inconnue de l'émetteur, il est impossible à ce dernier de prédéterminer à l'avance la signature SG du message M qu'il désire transmettre.

Dans une trosième phase, la signature SG ainsi calculée est associée au message M et à l'identification I au niveau de l'ensemble des circuits (7) et cet ensemble subit éventuellement des modifications pour le rendre inintelligible avant son transfert vers le dispositif récepteur (3) par la voie de transmission (2).

Le message signé (M, I, SG) est reçu par l'ensemble des circuits (10) du dispositif récepteur (3). Ces circuits (10) ont essentiellement pour fonction de restituer le message d'origine M avec sa signature SG et son identification I au niveau par exemple du dispositif de visualisation (11). Simultanément à cet affichage, qui n'est pas obligatoire, le message M, son identification I et sa signature SG peuvent être automatiquement imprimés sur le support papier (13) par l'intermédiaire du dispositif d'entrée-sortie (12).

Ensuite, toute personne au niveau du dispositif récepteur (3) peut prendre connaissance du message signé reçu du dispositif émetteur (1). Toutefois, si la personne au niveau du dispositif récepteur (3) considère que le message lui est addressé (tout simplement parce que son nom figure dans le message), elle peut s'assurer conformément à l'invention, de l'authenticité de la signature SG du message pour identifier son origine. Il suffit pour cela que cette personne ait en sa possession la carte de contrôle (3b) qui peut être à la disposition de plusieurs personnes.

Dans une première phase, la personne précitée ou récepteur doit accoupler la carte de contrôle (3b) au dispositif récepteur (3) pour initialiser le processus d'authentification de la signature SG du message M reçu.

Dans une seconde phase, le procédé d'authentification de la signature SG du message M reçu consiste tout d'abord à calculer la clé secrète S de l'émetteur du message, puis à recalculer la signature SG de ce message au niveau du dispositif récepteur (3), à partir des informations préenregistrées dans la carte de contrôle (3b). Pour cela, le récepteur, en supposant que le message est transcrit sur le support papier (13) précité, réintroduit le texte du message ainsi que son identification I dans le dispositif récepteur (3) par l'intermédiaire du dispositif d'entrée-sortie (12). L'identification I et le message initial ou sa forme contracte'e sont transmis par les bornes d'entrée (21) aux circuits de traitement (15) de la carte de contrôle (3b) accouplée à l'appareil récepteur (3).

Pour calculer la clé secrète S de l'émetteur du message, les circuits de traitement (15) déroulent le programme P' enregistré dans la zone (14c) de la mémoire (14), ce programme prenant en compte l'identification I du message. Plus précisément, les $n$ paramètres représentatifs de cette identification I sont utilisés comme $n$ adresses identifiant $n$ clés élémentaires parmi $m$ clés élémentaires ($m$ $n$) pré-enregistrées dans la zone secrète (14a) de la mémoire (14). Le programme P' va donc rechercher les $n$ clés élémentaires adressées et reconstituer la clé secrête de l'émetteur du message en combinant ces $n$ cles élémentaires. Bien entendu, cette clé secrête S ainsi déterminée doit être identique à la clé secrète préenregistrée dans la carte de signature (1b) attribuée à l'émetteur du message.

Ensuite, les circuits de traitement (15) recalculent automatiquement la signature SG du message fourni par le récepteur. Pour cela, les circuits de traitement (15) déroulent le programme P de calcul de signature pre'enregistré dans la zone (14b) de la mémoire (14). Ce programme P est strictement identique au programme P préenregistré dans la zone (5b) de la mémoire (5) de la carte signature (1b) accouplée au dispositif émetteur (1) au cours de la transmission du message M. Ce programme P prend en compte le contenu du message M et la clé secrête S telle que précédemment déterminée par le programme P'.

Dans une troisième phase, la signature SG recalcule'e par les circuits de traitement (15) est envoyée à une entrée du dispositif comparateur (16). L'autre entrée du dispositif comparateur (16) reçoit, par l'intermédiaire des bornes d'entrée (24), la signature SG fournie par le récepteur par l'intermédiaire du dispositif d'entrée-sortie (12). Le dispositif comparateur (16) compare ces deux signatures et transmet par l'intermédiaire des bornes de sortie (26) un signal d'exitation à destination de l'élément témoin (17). Cette excitation intervient par exemple uniquement dans le cas où les deux signatures correspondent exactement.

Dans ces conditions le récepteur est informé uniquement du résultat de la comparaison vrai ou différent de la signature donnée par le récepteur et de la signature recalculée automatiquement par le dispositif récepteur (3).

Ainsi le dispositif récepteur (3) est en mesure de détecter toute modification au niveau du message et/ou de son identité et/ou de sa signature, sans dévoiler qu'elle aurait été la valeur de la signature correspondant à un message modifié. Dans ces conditions, toute fraude devient impossible et le récepteur d'un message a la possibilité de déterminer avec exactitude la provenance du message reçu.

Bien évidemment, un tel procédé d'identification nécessite une certaine conformité entre la carte de signature (lb) côté émission et la carte de contrôle (3b) côté réception, ces deux supports devant contenir des informations communes. Etant donné le caractère inviolable de ces supports, c'est au niveau de leur fabrication ou de leur première attribution à une personne ou groupe de personnes que ces problèmes sont réglés.

Par mesure de sécurité, il est également avantageux de prevoir au niveau de l'appareil récepteur (3) un compteur d'usage (non représente) qui limite le nombre d'authentifications possibles par la carte de contrôle (3b). Une telle limitation permet d'éviter une recherche par effet exhaustif susceptible de permettre de retrouver la clé secrète S attribuée à une personne.

**0 077 238**

**Revendications**

1. Procédé pour authentifier la signature d'un message signé reçu par un appareil récepteur (3) et transmis à partir d'un appareil émetteur (1) par une voie de transmission quelconque (2), la signature (SG) d'un message (M) étant élaborée automatiquement au niveau de l'appareil émetteur (1) à partir d'un programme (P) de calcul de signature faisant au moins appel au contenu du message (M) à transmettre et à un paramètre ou clé secrète (S) inconnue de la personne ou émetteur du message (M), caractérisé en ce qu'il consiste, pour vérifier l'authenticité de la signature (SG) d'un message (M) reçu par l'appareil récepteur (3) :
- à recalculer automatiquement la signature (SG) du message reçu (M) à partir d'au moins le même programme (P) précité prenant en compte le contenu du message (M) reçu et la même clé secrète (S) précitée également inconnue de la personne ou récepteur du message,
- à comparer automatiquement la signature (SG) du message reçu et la signature (SG) recalculée au niveau de l'appareil récepteur (3),
- à indiquer seulement au récepteur du message, le résultat égal ou différent de la comparaison précédente tout en interdisant au récepteur du message la possibilité de pouvoir prendre connaissance de la valeur de la signature recalculée.

2. Procédé selon la revendication 1, caractérisé en ce qu'il consiste:
- au niveau de l'appareil émetteur (1) : à autoriser plusieurs personnes à émettre des messages signés avec élaboration automatique de la si nature chaque personne ayant d'une part une clé secrète (S) propre inconnue de la personne, et d'autre part une identite I non secrete transmise avec le message (M), et
- au niveau de l'appareil récepteur (3) : avant de recalculer la signature (SG) du message (M) reçu, a déterminer automatiquement la clé secrète (S) de l'émetteur du message (M) à partir de l'identité I de l'émetteur transmise avec le message (M).

3. Procédé selon la revendication 1 ou 2, caractérisé en ce qu'il consiste à subdiviser la clé secrète (S) de chaque personne émettrice d'un message (M) en n clés élémentaires secràtes choisies parmi m clés élémentaires secrètes regroupées dans une zone mémoire secrète (14a) de l'appareil récepteur (3), et à identifier chaque personne émettrice par n paramètres représentatifs des adresses de n clés élémentaires dans la zone mémoire secrète (14a), ces n paramètres ou identification I étant transmis avec le message (M) pour permettre à l'appareil récepteur (3) de calculer automatiquement et secrètement, au moyen d'un programme P', la clé secrète (S) de la personne émettrice avant de recalculer la signature (SG) du message (M) reçu.

4. Dispositif pour la mise en oeuvre du procédé tel que défini selon l'une des revendications précédentes, du type constitué par un appareil émetteur (1) relié par une voie de transmission quelconque (2) à un appareil récepteur (3), l'appareil émetteur (1) comprenant au moins un dispositif de mémorisation (5) dans lequel sont au moins enregistrés un programme (P) de calcul de signature et un paramètre ou clé secràte (S) inconnue de l'émetteur du message, des circuits de traitement (6) pour élaborer automatiquement la signature (SG) d'un message (M) à partir du programme (P) précité qui prend en compte le contenu du message (M) et la clé secrête (S) précitée, caractérisé en ce que l'appareil récepteur (3) comprend au moins :
- un dispositif de mémorisation (14) dans lequel sont au moins enregistrés le programme (P) précité et la même clé secrète (S) précitée également inconnue du récepteur du message,
- des circuits de traitement (15) pour recalculer la signature (SG) d'un message reçu à partir du contenu du message, du programme (P) et de la clé secrête (S) precités,
- un dispositif de comparaison (16) dont une première entrée reçoit de l'extérieur la signature (SG) du message (M) reçu et dont la seconde entrée reçoit la signature recalculée précitée, et
- un dispositif témoin (16) à au moins deux états stables indiquant respectivement les résultats vrai ou différent de la comparaison précitée, l'entrée du dispositif témoin (16) étant reliée à la sortie du dispositif de comparaison (15).

5. Dispositif selon la revendication 4, caractérisé en ce que le dispositif de mémorisation (14) de l'appareil récepteur (3) contient une première zone secrète (14a) dans laquelle sont pré-enregistrés les m clés élémentaires précitées, et une deuxième zone (14c) dans laquelle est pré-enregistré un second programme (P') de calcul de la clé secrète (S) de la personne émettrice d'un message à partir des n paramàtres précités représentatifs des adresses des n clés élémentaires et transmis avec le message (M).

6. Dispositif selon la revendication 4 ou 5, caractérisé en ce que l'appareil émetteur (1) est composé de deux parties: une partie fixe (1a) accessible à toute personne et qui est destinée à assurer la transmission d'un message (M), et un dispositif portatif (1b) ou carte de signature, personnelle à chaque personne et renfermant de façon inaccessible depuis l'extérieur la clé secràte (S) de la personne, les circuits de traitement (6) pour calculer la signature (SG) d'un message (M) à partir du contenu du message (M) et de la clé secrète (S), et de préférence le programme (P) d'élaboration automatique de cette signature (SG).

7. Dispositif selor la revendication 4 ou 5, caractérisé en ce que l'appareil récepteur (3) est composé de deux parties : une partie fixe (3a) accessible à toute personne susceptible de recevoir un message (M), et un dispositif portatif (3b) ou carte de contrôle à la disposition de plusieurs personnes et renfermant, de façon inaccessible depuis l'extérieur, le dispositif de mémorisation (14) precité, les circuits de traitement (15) précités et le circuit de comparaison (16) précite.

8. Dispositif selon la revendication 7, caractérisé en ce que la borne d'entrée du dispositif de comparaison (16) précité qui reçoit la signature recalculée (SG) précitée est inaccessible depuis l'extérieur.

9. Dispositif selon la revendication 6, caractérisé en ce que la clé secrète (S) précitée et le programme de calcul (P) précité sont pré-enregistrés lors de fabrication de la carte de signature (Ib).

10. Dispositif selon la revendication 7, caractérisé en ce que les informations contenues dans le dispositif de mémorisation (14) précité sont pré-enregistrées lors de la fabrication de la carte de contrôle (3b).

11. Dispositif selon la revendication 7, caractérisé en ce que l'élément témoin (7) précité est un te'moin lumineux ou sonore.

12. Dispositif selon la revendication 11, caractérisé en ce que l'élément témoin (17) precité est porté par la partie fixe (3a) de l'appareil récepteur (3).


**Patentansprüche**

1. Verfahren zum Authentifizieren der Unterzaichnung einer unterzeichneten Nachricht, die durch ein Empfangsgerät (3) empfangen und von einem Sendegerät (1) über einen beliebigen Übertragungsweg (2) übertragen wird, wobei die Unterzeichnung (SG) einer Nachricht (M) automatisch im Bereich des Sendegeräts (1) ausgehend von einem UnterzeichnungsRechenprogramm (P) erzeugt wird, welches wenigstens vom Inhalt der zu übertragenden Nachricht (M) und von einem geheimen Schlüsselparameter (S) Gebrauch macht, welcher der die Nachricht (M) sendenden Person oder Sendeeinrichtung unbekannt ist, dadurch gekennzeichnet, daß es darin besteht, zur Überprüfung der Authentizität der Unterzeichnung (SG) einer durch das Empfangsgerät (3) empfangenen Nachricht (M):
- automatisch die Unterzeichnung (SG) der empfangenen Nachricht (M) ausgehend von wenigstens dem selben vorgenannten Programm (P) nachzurechnen, wobei der Inhalt der empfangenen Nachricht (M) und der selbe, vorgenannte geheime Schlüssel (S), welcher der die Nachricht empfangenden Person oder Empfangseinrichtung ebenfalls unbekannt ist, berücksichtigt werden,
- automatisch die Unterzeichnung (SG) der empfangenen Nachricht mit der im Bereich des Empfängergeräts (3) neu berechneten Unterzeichnung (SG) zu vergleichen,
- nur dem Nachrichtenempfänger das gleiche oder verschiedene Ergebnis des vorausgehenden Vergleichsvorganges anzugeben, wobei gleichzeitig dem Nachrichtenempfänger die Möglichkeit verwehrt wird, vom Wert der neu berechneten Unterzeichnung Kenntnis zu erhalten.

2. Verfahren nach Anspruch 1, dadurch gekennzeichnet, daß es darin besteht:
- im Bereich des Sendegeräts (1): mehreren Personen zu erlauben, unter automatischer Erzeugung der unterschriebene Nachrichten auszusenden, wobei jede Person einerseits einen eigenen geheimen Schlüssel (S) besitzt, welcher ihr unbekannt ist, und andererseits eine nicht geheime Identität (I) besitzt, welche mit der Nachricht (M) übertragen wird, und
- im Bereich des Empfangsgerätes (3): vor der Neuberechnung der Unterzeichnung (SG) der empfangenen Nachricht (M) automatisch den geheimen Schlüssel (S) des Senders der Nachricht (M) aus der mit der Nachricht (M) übertragenen Identität (I) des Senders zu bestimmen.

3. Verfahren nach Anspruch 1 oder 2, dadurch gekennzeichnet, daß es darin besteht, den geheimen Schlüssel (S) jeder eine Nachricht (M) aussendenden Person in n elementare geheime Schlüssel zu unterteilen, welche unter m geheimen elementaren Schlüsseln ausgewählt sind, die in einer geheimen Speicherzone (14a) des Empfangsgerätes (3) gruppiert sind, und jede sendende Person durch n Parameter zu identifizieren, welche die Adressen von n elementaren Schlüsseln in der geheimen Speicherzone (14a) darstellen, wobei diese n Parameter bzw. die Identifikation (I) mit der Nachricht (M) übertragen werden, um es dem Empfangsgerät (3) zu gestatten, automatisch und geheim mittels eines Programmes P' den geheimen Schlüssel (S) der sendenden Person zu berechnen, bevor die Unterzeichnung (SG) der empfangenen Nachricht (M) neu berechnet wird.

4. Vorrichtung zur Durchführung des Verfahrens, wie es in einem der vorstehenden Ansprüche beschrieben ist, vom Tvp, der gebildet ist aus einem Sendegerät (1), welches über einen beliebigen Übertragungskanal (2) mit einem Empfangsgerät (3) verbunden ist, wobei das Sendegerät (1) wenigstens eine Speichervorrichtung (5) umfaßt, worin wenigstens ein Programm (P) zur Berechnung der Unterzeichnung und ein geheimer, dem Nachrichtensender unbekannter Parameter oder Schlüssel (S) gespeichert sind, sowie aus Verarbeitungsschaltungen (6) zur automatischen Erzeugung der Unterzeichnung (SG) einer Nachricht (M) ausgehend von dem genannten Programm (P), welches den Inhalt der Nachricht (M) und den genannten geheimen Schlüssel (S) berücksichtigt, dadurch gekennzeichnet, daß das Empfangsgerät (3) wenigstens umfaßt:
- eine Speichervorrichtung (13), worin wenigstens das vorgenannte Programm (P) und der selbe vorgenannte geheime Schlüssel (S), welcher dem Nachrichtenempfänger ebenfalls unbekannt ist, gespeichert sind,
- Verarbeitungsschaltungen (15) zur Neuberechnung der Unterzeichnung (SG) einer empfangenen Nachricht ausgehend von dem genannten Nachrichteninhalt, dem genannten Programm (P) und dem genannten geheimen Schlüssel (S),
- eine Vergleichervorrichtung (16), wovon ein erster Eingang von außen her die Unterzeichnung (SG) der empfangenen Nachricht (M) und der zweite Eingang die genannte neuberechnete Unterzeichnung empfängt, und
- eine Anzeigevorrichtung (16) mit wenigstens zwei stabilen Zuständen, welche jeweils das übereinstimmende bzw. abweichende Ergebnis des genannten Vergleiches anzeigt, wobei der Eingang der Anzeigevorrichtung (16) mit dem Ausgang der Vergleichervorrichtung (15) verbunden ist.

5. Vorrichtung nach Anspruch 4, dadurch gekennzeichnet, daß die Speichervorrichtung (14) des Empfangsgerätes (3) eine erste geheime Zone (14a) enthält, worin die m elementaren genannten Schlüssel zuvor abgespeichert sind, und eine zweite Zone (14c) enthält, worin ein zweites Programm (P') zur Berechnung des geheimen Schlüssels (S) der eine Nachricht aussendenden Person ausgehend von den n vorgenannten Parametern, welche die Adressen der n elementaren, mit der Nachricht (M) übertragenen Schlüssel darstellen, im voraus abgespeichert ist.

6. Vorrichtung nach Anspruch 4 oder 5, dadurch gekennzeichnet, daß das Sendegerät (1) zusammengesetzt ist aus zwei Teilen: einem ortsfesten Teil (1a), welcher für jede Person zugänglich ist und dazu bestimmt ist, die Übertragung einer Nachricht (M) zu gewährleisten, und einer tragbaren Vorrichtung (1b) oder Unterschriftskarte, welche individuell zu jeder Person gehört und in einer von außen unzugänglichen Weise den geheimen Schlüssel (S)-der Person, die Verarbeitungsschaltungen (6) zur Berechnung der Unterzeichnung (SG) einer Nachricht (M) aus dem Inhalt der Nachricht (M) und den geheimen Schlüssel (S) sowie vorzugsweise das Programm (P) zur automatischen Erzeugung dieser Unterzeichnung (SG) einschließt.

7. Vorrichtung nach Anspruch 4 oder 5, dadurch gekennzeichnet, daß das Empfangsgerät (3) aus zwei Teilen zusammengesetzt ist: einem ortsfesten Teil (3a), der für jede Person zugänglich ist, die eine Nachricht (M) empfangen kann, und einer tragbaren Vorrichtung (3b) oder Kontrollkarte, welche mehreren Personen zur Verfügung steht und in von außen unzugänglicher Weise die genannte Speichervorrichtung (14), die genannten Verarbeitungsschaltungen (15) und die genannte Vergleicherschaltung (16) einschließt.

8. Vorrichtung nach Anspruch 7, dadurch gekennzeichnet, daß der Eingangsanschluß der genannten Vergleichervorrichtung (16), welcher die genannte neu berechnete Unterzeichnung (SG) empfängt, von der Außenseite her unzugänglich ist.

9. Vorrichtung nach Anspruch 6, dadurch gekennzeichnet, daß der genannte geheime Schlüssel (S) und das genannte Rechenprogramm (P) bei der Herstellung der Unterschriftskarte (1b) vorab aufgezeichnet werden.

10. Vorrichtung nach Anspruch 7, dadurch gekennzeichnet, daß die in der genannten Speichervorrichtung (14) enthaltenen Informationen vorab während der Herstellung der Kontrollkarte (3b) eingespeichert werden.

11. Vorrichtung nach Anspruch 7, dadurch gekennzeichnet, daß das genannte Anzeigeelement (17) eine Licht- oder Tonanzeige ist.

12. Vorrichtung nach Anspruch 11, dadurch gekennzeichnet, daß das genannte Anzeigeelement (17) von dem ortsfesten Tewil (3a) des Empfangsgerätes (3) getragen wird.

## Claims

1. Method of authenticating the signature of a signed message received by a receiver apparatus (3) and transmitted from a transmitter apparatus (1) via an optional transmission channel (2), the signature (SG) of a message (M) being generated automatically at the location of the transmitter apparatus (1) from a signature calculation program (P) having recourse at least to the contents of the message (M) to be transmitted and to a secret parameter or key (S) unknown to the person or transmitter of the message (M), characterised in that for the purpose of verifying the authenticity of the signature (SG) of a message (M) received by the receiver apparatus (3), it consists in:
- automatically recalculating the signature (SG) of the message (M) received, from at least the same said program (P) whilst allowing for the contents of the message (M) received and for the same said secret key (S) which is equally unknownto the person or receiver of the message,
- automatically comparing the signature (SG) of the message received and the signature (SG) recalculated at the level of the receiver apparatus (3),
- indicating only to the receiver of the message, the identical or different result of the preceding comparison whilst denying to the receiver of the message the possibility to gain knowledge of the value of the recalculated signature.

2. Method according to claim 1, characterised in that it consists in:
- at the level of the transmitter apparatus (1): authorising several persons to send signed messages under automatic generation of the signature, each person having on the one hand an own secret key (S) not known to said person, and on the other hand an official identity I transmitted with the message (M), and
- at the level of the receiver apparatus (3): prior to recalculating the signature (SG) of the message (M) received, in automatically determining the secret key (S) of the sender of the message (M) from the sender's identity I transmitted with the message (M).

3. Method according to claim 1 or 2, characterised in that it consists in subdividing the secret key (S) of each person sending a message (M) into n secret elementary keys selected from amongst m secret elementary keys stored in a secret memory zone (14a) of the receiver apparatus (3), and in identifying each despatching person by n parameters representing the addresses of n elementary keys in the secret memory zone (14a), these n parameters or identification I being transmitted with the message (M) in order to enable the receiver apparatus (3) to perform an automatic and secret calculation, by means of a program P', of the secret key (S) of the despatching person before recalculating the signature (SG) of the message (M) received.

4. Device for carrying out the method as defined in accordance with any of the preceding claims, of the kind constituted by a transmitter apparatus (1) connected via an optional transmission channel (2) to a receiver apparatus (3), the transmitter apparatus (1) comprising at least one storage device (5) wherein are recorded at least one program (P) for signature calculation and a secret parameter or key (S) unknown to the sender of the message, processing circuits (6) for automatically generating the signature (SG) of a message (M) from the said program (P) which makes allowance for the contents of the message (M) and for the said secret key (S), characterised in that the receiver apparatus (3) comprises at least:

- a storage device (14) wherein are recorded at least the said program (P) and the same said secret key (S), equally unknown to the person receiving the message,

- processing circuits (15) for recalculating the signature (SG) of a message received from the contents of the message, from the said program (P) and from the said secret key (S),

- a comparator device (16) of which a first input is fed from the outside with the signature (SG) of the message (M) received and of which the second input receives the said recalculated signature, and

- an indicator device (16) having at least two stable conditions, indicating respectively the true or false results of the said comparison, the input of the indicator device (16) being connected to the output of the comparator device (15).

5. Device according to claim 4, characterised in that the storage device (14) of the reception apparatus (3) contains a first secret zone (14a) wherein are prerecorded the said $m$ elementary keys, and a second zone (14c) wherein is prerecorded a second program (P') for calculation of the secret key (S) of the person sending a message, from the said $n$ parameters representing the addresses of the $n$ elementary keys and transmitted with the message (M).

6. Device according to claim 4 or 5, characterised in that the transmitter apparatus (1) comprises two parts: fixed part (1a) accessible to any person and which is intended to assure the transmission of a message (M), and a portable device (1b) or signature card allocated to each person and which in a manner inaccessible from the outside encloses the secret key (S) of the person, the processing circuits (6) for calculating the signature (SG) of a message (M) from the contents of the message (M) and from the secret key (S), and preferably the program (P) for automatic generation of this signature (SG).

7. Device according to claim 4 or 5, characterised in that the receiver apparatus (3) comprises two parts: a fixed part (3a) available to any person able to receive a message (M), and a Portable device (3b) or verification card available to several persons and in a manner inaccessible from the outside enclosing the said storage device (14), the said processing circuits (15) and the said comparator circuit (16).

8. Device according to claim 7, characterised in that the input terminal of the said comparator device (16) which receives the said recalculated signature (SG) is inaccessible from the outside.

9. Device according to claim 6, characterised in that the said secret key (S) and the said calculation program (P) are prerecorded upon producing the signature card (1b).

10. Device according to claim 7, characterised in that the data contained in the said storage device (14) are prerecorded upon producing the verification card (3b).

11. Device according to claim 7, characterised in that the said indicator element (17) is a visible or audible indicator.

12. Device according to claim 11, characterised in that the said indicator element (17) is carried by the fixed part (3a) of the receiver apparatus (3).